**Europäisches Patentamt**

**European Patent Office**

**Office européen des brevets**

(19)

(11) Publication number: **0 034 733**
**B1**

(12)                   **EUROPEAN PATENT SPECIFICATION**

(45) Date of publication of patent specification: **09.11.83**

(21) Application number: **81100753.3**

(22) Date of filing: **03.02.81**

(51) Int. Cl.³: **C 23 F 1/02,** C 23 G 1/10, C 25 D 5/38

(54) **Method for treating a tube of a zirconium-based alloy when applying a protective layer.**

(30) Priority: **22.02.80 SE 8001401**

(43) Date of publication of application:
**02.09.81 Bulletin 81/35**

(45) Publication of the grant of the patent:
**09.11.83 Bulletin 83/45**

(84) Designated Contracting States:
**DE FR GB**

(56) References cited:
**US - A - 2 653 134**
**US - A - 2 711 364**
**US - A - 3 019 139**

(73) Proprietor: **AB ASEA-ATOM**
**S-721 83 Västeras (SE)**

(72) Inventor: **Vesterlund, Gunnar**
**Smältverksgatan 139**
**S-724 74 Västerås (SE)**

(74) Representative: **Mjörne, Olof et al,**
**ASEA AB Patent Department**
**S-721 83 Västerås (SE)**

Courier Press, Leamington Spa, England.

# Method for treating a tube of a zirconium-based alloy when applying a protective layer

Thin-walled tubes of Zircaloy are normally used as cladding tubes for fuel for nuclear reactors. Such tubes may be internally lined or clad with copper to increase the resistance of the tube to stress corrosion induced by fission products. For neutron economy it is necessary for such lining to be thin. One problem in connection with such cladding tubes is that during the operation of the nuclear reactor copper from the lining diffuses into the cladding tube so that after a time the copper lining loses its ability to protect the Zircaloy tube. One known method for preventing the diffusion of copper into a Zircaloy tube is to arrange a layer of zirconium dioxide between the inner surface of the tube and the copper layer. The zirconium dioxide layer, which thus serves as a barrier against the diffusion of copper into the zirconium-based alloy, may be applied as a coating on the tube by oxidizing the tube before the copper layer is applied thereon. The zirconium dioxide layer may also be accomplished after the copper layer has been applied on the tube by arranging the tube with the copper layer, at elevated temperature, in contact with water steam or another substance having the ability to oxidize zirconium but without the ability to oxidize copper.

It is known to activate the surface of a tube of a zirconium-based alloy by treating it with an activating solution before the tube is provided with a coating of copper or another metal electrolytically or by chemical precipitation. In this connection there has been used as activating solution an aqueous solution containing 10—20 g/litre ammonium bifluoride and 0.75—2 g/litre sulphuric acid and an aqueous solution containing 0.2 moles/litre (7.4 g/litre) ammonium fluoride and 0.13 moles/litre (2.6 g/litre) hydrogen fluoride, respectively.

According to the present invention, it has proved to be possible to provide a markedly improved adhesion of the copper layer to the base material in a tube of a zirconium-based alloy which is internally provided with a copper layer and with a zirconium dioxide layer arranged between the inner surface of the tube and the copper layer.

The present invention relates to a method of applying, on the internal surface of a tube of a zirconium-based alloy, a layer of copper and a layer of zirconium dioxide between the copper layer and the tube, characterised in that the internal surface of the tube, prior to the application of the layer of copper and zirconium dioxide, is treated with an activating solution in the form of an aqueous solution containing 1—3 grams/litre of hydrogen fluoride, 2—8 grams/litre of ammonium fluoride and 0.1—0.5 grams/litre of sulphuric acid, in which the amounts of hydrogen fluoride and ammonium fluoride are also adapted so that the amount of ammonium fluoride, calculated in moles, exceeds the amount of hydrogen fluoride, calculated in moles, by at least 5 per cent. In a particularly preferred embodiment, the solution contains 1—2 grams/litre HF, 3—4 grams/litre $NH_4F$ and 0.2—0.3 grams/litre $H_2SO_4$. A proportion of the above specified amount of ammonium fluoride and at least a proportion of the above specified amount of hydrogen fluoride being optionally provided in the form of ammonium bifluoride.

The zirconium-based alloy preferably consists of a zirconium tin alloy, for example the zirconium-based alloys known under the trade names Zircaloy 2 and Zircaloy 4, which contain 1.2—1.7 per cent by weight Sn, 0.07—0.24 per cent by weight Fe, 0.05—0.15 per cent by weight Cr, 0.0—0.08 per cent by weight Ni, 0.09—0.16 per cent by weight O, the remainder being zirconium and impurities, if any, of ordinary kind.

The reason for the markedly improved adhesion of the copper layer is probably the structure of the inner surface of the tube that is achieved when treating the tube with the activating solution. Contrary to what is the case when using the previously known activating solutions, where an even homogeneous surface is obtained, the treatment with the activating solution according to the present invention brings about a pitting of the surface. The pits may have a depth of 0.01—5 microns and a mutual distance which is less than 50 microns. The pitting results in a large efficient surface.

The surface of a zirconium-based alloy normally has a thin oxide layer. During the treatment of the surface with the activating solution according to the invention, the oxide is first corroded away pointwise. The pointwise area where the corrosion has started is then extended around the point of attack, whereby the above-mentioned pits are formed. In the attacked areas, the metallic material is exposed. The treatment should be performed so that the metallic material is exposed on at least half of the surface treated with the activating solution. The time of treatment is suitably one or a few minutes.

According to a preferred embodiment of the invention, the tube of the zirconium-based alloy is subjected to an oxidation before being treated with the activating solution. The oxidation step has proved to entail an increased reproducibility when manufacturing tubes having a pre-determined, desired adhesion of the copper layer. The oxidation may be performed with a plurality of oxidizing agents, for example by heating in air or oxygen gas to about 200—300°C for 15—90 minutes, or by immersing the tube in a 45% sodium hydroxide, which has been heated to about 90°C, for 30 minutes. The oxidation results in the formation of an oxide layer on the surface of the tube which preferably has a thickness of 0.01—0.1 micron. The tube thus oxidized is treated with the activating solution. The time of treatment is suitably one or a few minutes. Through the treatment with the activating solution, the previously described pitting is obtained involving exposure of the metallic material on at least half of the surface treated with the activating solution.

After the treatment with the activating solution, the copper layer is applied on the inner surface of the tube and a zirconium dioxide layer is applied between the inner surface of the tube and the copper layer. In a preferred embodiment, a copper layer having a thickness of 1—25 microns is applied electrolytically on the inner surface of the tube, whereafter the tube with the copper layer is brought into contact with water steam or another substance having the ability to oxidize zirconium but without the ability to oxidize copper, preferably at 200°C—550°C, until a layer of zirconium dioxide having a thickness of 0.01—10 microns has been formed between the copper layer and the tube of zirconium-based alloy. Preferably, the tube is then subjected to a heat treatment at 300°C—800°C in a vacuum or in an inert atmosphere for zirconium and copper, for example argon or helium atmosphere.

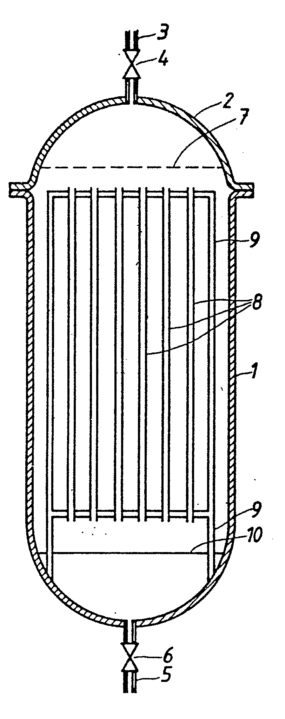

The invention will be explained in greater detail by way of example with reference to the accompanying drawing.

A tube of Zircaloy 2 for cladding fuel or a light water reactor is oxidized in air at a temperature of 250° for 30 minutes, thus obtaining an approximately 0.02 micron thick oxide layer on the tube. After washing the tube with water, it is treated with an activating solution in the form of an aqueous solution containing 3.7 grams/litre $NH_4F$, 1.3 grams/litre HF and 0.26 grams/litre $H_2SO_4$ for 2.5 minutes. The tube is then provided with an internal coating of copper. In that connection the tube may be connected to the negative pole of a DC source, whereas an anode of, for example, copper centrally arranged in the tube is then connected to the positive pole of the DC source. Electrolyte, which may consist of a sulphuric acid copper sulphate solution having a pH value of 0.5, is supplied to the space between tube and anode, possibly while the tube and the anode are moved relative to one another. The electrolysis may take place while using a current density of approximately 0.3 $A/cm^2$. Several tubes treated in this manner, in which the copper layer has a thickness of 5 microns, are treated in the autoclave according to the figure.

The autoclave 1 has a cover 2. The autoclave 1 may be provided with a heating device arranged in the sheath, for example heating coils, or be heated with, for example, hot air on the outside. The autoclave 1 is provided at its top with a tube 3 containing an openable and closable valve 4 and at its bottom with another tube 5 containing an openable and closable valve 6. Before the tubes are placed in the autoclave 1, it is filled with water to the level shown by the dashed line 7, and the water is boiled at atmospheric pressure for about half an hour while the valve 4 is held open. During this treatment, the water is degassed and escaping gases, for example oxygen, leave the autocalve 1 via the tube 3. Thereafter the cover 2 is removed and the tubes 8, provided with an internal coating of copper, are placed so as to be arranged in a rack 9 in the autoclave 1, whereafter the cover 2 is applied again. The rack 9 is of such a kind that the interior of the tubes is in open communication with the environment. After additional boiling, so as to remove any air entering in connection with the insertion of the tubes, the valve 4 is shut and the valve 6 is opened, the main part of the water then being pressed out through the conduit 5 to the level 10 shown by the unbroken line. The valve 6 is then shut. The autoclave 1 is then heated so as the tubes are surrounded with overheated stream of a temperature of 425°C with a pressure of 1—5 bar. After five hours' treatment at this temperature, a thickness of the barrier layer of zirconium dioxide of about 0.5 microns is obtained, and after 24 hours' treatment a thickness of about 1 micron is obtained. Thereafter, the tubes are heat-treated at a temperature of 550°C for three hours in argon atmosphere in a separate furnace.

In the example described, the barrier layer may be achieved with other substances than water stream with the ability to oxidize zirconium but without the ability to oxidize copper, such as water, carbon dioxide, carbon monoxide, sulphur dioxide and certain metal oxides such as oxides of iron, nickel, molybdenum and copper. It is possible to add hydrogen to the substance that brings about the barrier, preferably in an amount of 0.01 ppm to 50 ppm. In the described case, the copper layer may be alternatively applied by conventional precipitation with chemical methods.

The method according to the invention may also be applied if the zirconium dioxide layer is achieved on the inner surface of the tube before the copper layer is applied. For the formation of such a layer, the tube may be treated in the same way as has been described above with reference to the tube with an already-applied copper layer, such as, e.g. with water steam of a temperature 425°C for 24 hours. In this case, the copper layer is applied by conventional chemical precipitation, for example from an aqueous solution containing copper sulphate, sodium potassium tartrate, sodium hydroxide and formaldehyde.

## Claims

1. Method of applying a layer of copper and a layer of zirconium dioxide between the copper layer and the tube on the internal surface of a tube of zirconium-based alloy, characterised in that the internal surface of the tube, prior to the application of the layers of copper and zirconium dioxide, is treated with an activating solution in the form of an aqueous solution containing 1—3 grams/litre hydrogen fluoride, 2—8 grams/litre ammonium fluoride and 0.1—0.5 grams/litre sulphuric acid, in which the amounts of hydrogen fluoride and ammonium fluoride are also adapted so that the amount of ammonium fluoride, calculated in moles, exceeds the amount of hydrogen fluoride, calculated in moles, by at least 5 per cent.

2. Method according to claim 1, characterised in that the internal surface of the tube is oxidized before being treated with the activating solution.

3. Method according to claim 1 or 2, characterised in that the treatment with the activating solution is carried out in such a way that at least half of the internal surface is free from oxide coating.

4. Method according to any of claims 1 to 3, characterised in that a layer of copper is applied on the internal surface of the tube, treated with the activating solution, and the inner surface of the tube with the applied copper layer is arranged in contact with water steam at a temperature of 200°C—550°C until a layer of zirconium dioxide has been formed between the copper layer and the tube of zirconium-based alloy.

### Übersetzung der Patentansprüche

1. Verfahren, um auf der inwendigen Fläche eines Rohres aus einer zirkoniumbasierten Legierung eine Schicht von Kupfer und eine Schicht von Zirkoniumdioxyd zwischen der Kupferschicht und dem Rohr anzubringen, dadurch gekennzeichnet, daß die inwendige Fläche des Rohres vor dem Anbringen der Schichten von Kupfer und Zirkoniumdioxyd mit einer Aktivierungslösung in Form einer Wasserlösung behandelt wird, die 1—3 g/Liter Fluorwasserstoff, 2—8 g/Liter Ammoniumfluorid und 0,1—0,5 g/Liter Schwefelsäure enthält, und in welcher die Mengen Fluorwasserstoff und Ammoniumfluorid außerdem so angepaßt sind, daß die Menge Ammoniumfluorid, gerechnet in Mol, die Menge Fluorwasserstoff, gerechnet in Mol, mit mindestens 5 Prozent übersteigt.

2. Verfahren nach Anspruch 1, dadurch gekennzeichnet, daß die inwendige Fläche des Rohres oxidiert wird, bevor sie mit der Aktivierungslösung behandelt wird.

3. Verfahren nach Anspruch 1 oder 2, dadurch gekennzeichnet, daß die Behandlung mit der Aktivierungslösung so ausgeführt wird, daß mindestens die Hälfte der inwendigen Fläche frei von einem Oxydbelag ist.

4. Verfahren nach einem der Ansprüche 1 bis 3, dadurch gekennzeichnet, daß eine Schicht von Kupfer auf der mit der Aktivierungslösung behandelten inwendigen Fläche des Rohres aufgebracht wird und die Innenfläche des Rohres mit der aufgebrachten Kupferschicht in Kontakt mit Wasserdampf bei einer Temperatur von 200°C bis 550°C angeordnet wird, bis eine Schicht von Zirkoniumdioxyd zwischen der Kupferschicht und dem Rohr aus einer zirkoniumbasierten Legierung gebildet worden ist.

### Revendications

1. Procédé d'application d'une couche de cuivre et d'une couche d'oxyde de zirconium entre la couche de cuivre et le tube, sur la surface interne d'un tube d'alliage à base de zirconium, caractérisé en ce qu'avant l'application des couches de cuivre et d'oxyde zirconium, la surface interne du tube est traitée par une solution activante sous la forme d'une solution aqueuse contenant 1 à 3 g/litre d'acide fluorhydrique, 2 à 8 g/litre de fluorure d'ammonium et 0,1 à 0,5 g/litre d'acide sulfurique, les proportions d'acide fluorhydrique et de fluorure d'ammonium étant également adaptées de telle manière que la quantité de fluorure d'ammonium, calculée en moles, dépasse d'au moins 5% la quantité d'acide fluorhydrique, calculée en moles.

2. Procédé selon la revendication 1, caractérisé en ce que la surface interne du tube est oxydée avant d'être traitée par la solution activante.

3. Procédé selon la revendication 1 ou 2, caractérisé en ce que le traitement par la solution activante est effectué de telle manière qu'au moins la moitié de la surface interne soit exempte de couche de revêtement d'oxyde.

4. Procédé selon l'une quelconque des revendications 1 à 3, caractérisé en ce qu'une couche de cuivre est appliquée sur la surface interne du tube, traitée par la solution activante, puis la surface interne du tube, sur laquelle est appliquée la couche de cuivre, est mise en contact avec de la vapeur d'eau à une température de 200 à 550°C, jusqu'à ce qu'une couche d'oxyde de zirconium se soit formée entre le couche de cuivre et le tube d'alliage à base de zirconium.